# FASCICULE DE BREVET EUROPEEN

(11) **EP 1 295 206 B1**
(45) Date de publication et mention de la délivrance du brevet: **26.10.2005**
(21) Numéro de dépôt: 01947591.2
(22) Date de dépôt: 22.06.2001
(51) Int. Cl.: G06F 11/36

(54) **DISPOSITIF ET PROCEDE D'EVALUATION D'ALGORITHMES**
VORRICHTUNG UND VERFAHREN ZUR AUSWERTUNG VON ALGORITHMEN
DEVICE AND METHOD FOR EVALUATING ALGORITHMS

(30) Priorité: 30.06.2000 FR 0008509
(43) Date de publication de la demande: 26.03.2003
(73) Titulaire: STMicroelectronics S.A., 92120 Montrouge (FR)
(72) Inventeur: BELLOCCHIO, Marc, F-13400 Aubagne (FR)
(74) Mandataire: Bentz, Jean-Paul
(86) Numéro de dépôt international: PCT/FR2001/001982
(87) Numéro de publication internationale: WO 2002/001360

(56) Documents cités:
- KIRBY, J., JR.; ARCHER, M.; HEITMEYER, C.: "SCR: a practical approach to building a high assurance COMSEC system" COMPUTER SECURITY APPLICATIONS CONFERENCE, 1999. (ACSAC '99). PROCEEDINGS. 15TH ANNUAL , 1999, 6 - 10 décembre 1999, pages 109-118, XP002160925
- HUANG K C ET AL: "EPVD:AN INTERACTIVE PROTOCOL SPECIFICATION AND VALIDATION ENVIRONMENT IN ESTELLE FORMAL SPECIFICATION" MICROPROCESSING AND MICROPROGRAMMING,NL,ELSEVIER SCIENCE PUBLISHERS, BV., AMSTERDAM, vol. 35, no. 1 / 05, 1 septembre 1992 (1992-09-01), pages 71-77, XP000325052 ISSN: 0165-6074
- P. BIEBER, N. BOULAHIA-CUPPENS, T. LEHMANN, E. VAN WICKEREN: "Abstract Machines for Communication Security" PROCEEDINGS OF THE COMPUTER SECURITY FOUNDATIONS WORKSHOP, FRANCONIA, 1993., 15 - 17 juillet 1993, pages 137-146, XP002160926
- DOMINIQUE BOLIGNANO: "The VIP Approach for the Formal Verification of Electronic Commerce Protocols" ERCIM NEWS NO.30, ONLINE EDITION, [en ligne] juillet 1997 (1997-07), XP002160927 Extrait de l'Internet: <URL:http://www.ercim.org/publication/Erci m_News/enw30/bolignano.html> [extrait le 2001-02-21]

## Description

La présente invention concerne un dispositif et un procédé d'évaluation d'algorithmes, notamment, mais non exclusivement, dans le domaine du cryptage de données.

Un algorithme au sens général est un système mathématique qui effectue un nombre fini d'opérations sur des données fournies en entrée. Ainsi, on peut considérer un moyen de calcul algorithmique comme un bloc fonctionnel qui accepte des données d'entrée et délivre des données de sortie correspondant à un ensemble déterminé d'opérations effectuées sur les données d'entrée.

Le cryptage est la technique de transformation d'un message initialement en clair en un message codé compréhensible seulement par qui dispose d'un code de cryptage spécifique. Lorsque les messages sont traités par des moyens électroniques, ils prennent la forme de données numériques qui comprennent des mots binaires représentant des valeurs ou des instructions. Dans de nombreuses applications, il est important d'assurer que les informations contenues dans ces données demeurent confidentielles, ce qui implique la nécessité de les stocker et/ou de les transmettre sous forme cryptée.

A cette fin, on soumet les données à protéger à un moyen de calcul algorithmique programmé pour effectuer un algorithme de cryptage. Les données cryptées en sortie sont ensuite manipulées dans les parties vulnérables d'un système d'exploitation, notamment les sites de stockage et les voies de transmission. Même si ces données cryptées sont éventuellement accessibles au sein du système par des personnes non autorisées, elles ne peuvent révéler leur information sans une opération de décryptage. Le décryptage est une opération inverse du cryptage qui permet de restituer les informations des données protégées grâce à un algorithme de décryptage. Ce dernier comprend une suite d'opérations inverses à l'algorithme de cryptage, impliquant éventuellement une clé de décryptage, c'est-à-dire un mot de code utilisé lors du cryptage.

Un exemple d'application qui fait souvent appel au cryptage et au décryptage de données numériques est celui des cartes à puce. Les cartes à puce sont maintenant très largement utilisées comme support de données confidentielles (bancaires, commerciales, médicales, etc.). Il est donc important de protéger les informations qui transitent par les puces, aussi bien d'une attaque provenant d'un tiers que d'un titulaire tenté de les modifier à son avantage.

Les données sensibles de la carte à puce et de ses interfaces sont classiquement cryptées par des algorithmes de cryptage qui deviennent de plus en plus complexes. Ces algorithmes font notamment intervenir des calculs arithmétiques sur des données très longues, atteignant 1024 bits, voire 2196 bits.

L'élaboration d'algorithmes sur puce fait appel à des fonctions élémentaires qui doivent être utilisées de manière précise, en fonction d'une spécification bien définie.

La création d'un code cryptographique passe ainsi par les phases de spécification, de conception générale, de conception détaillée, de codage, de test d'intégration, et de validation.

La phase de test et de correction d'erreurs relevées durant le test (généralement connue par le terme anglo-saxon de "debug") est longue et difficile à mettre en oeuvre. En effet, il faut créer des programmes de test, lancer les tests, et ensuite corriger le code source avec des données allant jusqu'à 2196 bits.

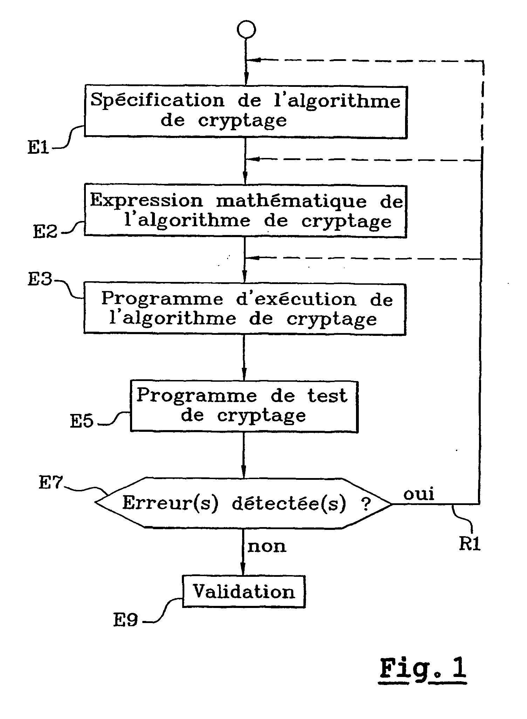

Les principales étapes intervenant dans l'élaboration classique d'un programme de cryptage validé selon une approche classique seront brièvement décrites par référence à la figure 1.

La première étape E1 consiste à élaborer la spécification, ou cahier des charges, de l'algorithme. Il s'agit là de fixer les paramètres souhaités pour l'application considérée : nombre de bits en entrée, en sortie, degré de sécurisation du cryptage, techniques de cryptage à employer, etc.

A partir de cette spécification initiale, on crée l'expression mathématique de l'algorithme de cryptage (étape E2). Cette opération est effectuée manuellement sur papier, éventuellement avec l'aide d'une calculette, par application ou adaptation de techniques algorithmiques qui permettent de répondre à la spécification. A cette fin, on peut faire appel à des fonctions de cryptage dites de haut niveau : techniques Rivest, Shamir et Adelman (RSA), Secure Hash Algorithm (SHA), Digital Signature Algorithm (DSA), et autres, et/ou de bas niveau : addition, soustraction, division multiplication, .... Le résultat de cette opération demeure sous une forme abstraite et ne peut être validé dans le contexte d'un système électronique d'exploitation de l'algorithme, comme une carte à puce.

On procède donc ensuite à l'étape E3 de réalisation d'un programme d'exécution de l'algorithme de cryptage. Autrement dit, on transcrit l'expression mathématique de l'algorithme venant d'être obtenu en programme d'ordinateur qui permet d'exécuter cet algorithme. Ce programme est compilé sous forme de code source dans le langage bas niveau qui sera utilisé par le système électronique d'exploitation. Il doit permettre d'introduire en entrée les données binaires à crypter et de fournir en sortie ces données cryptées par l'algorithme établi à l'étape E2, ou inversement.

Cependant, la complexité de l'ensemble des étapes précitées E1 à E3 est telle qu'il est nécessaire de procéder à des étapes de validation avant d'exploiter ce programme.

A cette fin, on réalise (étape E5) un programme de test spécifiquement adapté à l'algorithme, au programme d'exécution et au système d'exploitation. Ce programme de test fournit au programme d'exécution des données d'entrée conformes à la spécification et selon une séquence déterminée visant à évaluer autant de cas possibles d'utilisation de l'algorithme.

Ensuite, on analyse manuellement les données fournies en réponse par le programme d'exécution pour vérifier qu'elles correspondent bien à la spécification, s'il n'est pas intervenu une erreur, etc. (étape E7).

Si une erreur ou une non-conformité est détectée, on tente d'analyser sa cause et on retourne à l'étape mise en cause pour tenter de rectifier le programme d'exécution (rebouclage R1). Cette étape mise en cause, ainsi que celles qui suivent, doit alors être répétée jusqu'à ce qu'aucune erreur ne soit détectée.

Dans ce cas, on procède à la validation du programme de cryptage dans sa forme utilisable par le système électronique d'exploitation (étape E9). Ce programme peut alors être reproduit en mémoire des différents supports du système, par exemple dans les cartes à puce.

On note que le programme de test de cryptage est rarement mis en cause en cas d'erreur, ce qui implique que chaque erreur constatée requiert presque toujours une révision du code exécutable du programme d'exécution, et souvent de l'expression mathématique de l'algorithme de cryptage.

Cette approche classique est donc laborieuse, coûteuse en ressources et grève considérablement le temps de développement de nouveaux produits d'exécution de l'algorithme de cryptage ou autre. Ces inconvénients sont notamment dus au fait que l'on doit réaliser un programme d'exécution de l'algorithme et un programme de test de ce dernier avant même d'avoir validé l'algorithme.

Le document *KIRBY, J., JR.; ARCHER, M.; HEITMEYER, C.: 'SCR: a practical approach to building a high assurance COMSEC system' COMPUTER SECURITY APPLICATIONS CONFERENCE, 1999. (ACSAC '99). PROCEEDINGS. 15TH ANNUAL , 1999, 6 - 10 décembre 1999, pages 109-118, XP002160925,* divulgue une méthode permettant de construire et d'analyser les exigences mathématiques précises d'une spécification de type COMSEC (Communications Security), ladite méthode utilisant une interface graphique ainsi qu'un simulateur permettant de valider le comportement du système spécifié.

Au vu de ce problème, la présente invention propose un dispositif d'évaluation d'algorithmes selon la revendication 1.

Avantageusement, les fonctionnalités de base se présentent sous forme de modules respectifs, dont certains au moins sont des modules d'exécution d'opérations de bas niveau (par exemple des opérations arithmétiques simples). D'autres modules peuvent être des modules d'exécution d'opérations de niveau plus élevé (par exemple des opérations du type SHA, DSA,...).

Pour une plus grande facilité d'utilisation, le dispositif peut comprendre une interface graphique permettant d'accéder à l'ensemble des fonctions offertes.

Il peut présenter sous forme graphique les paramètres d'entrée et de sortie de données relatifs à chaque fonctionnalité de base mise en oeuvre.

De préférence, les moyens d'indication présentent un diagnostic des éventuelles erreurs, indiquant le ou les fonctionnalités de base mises(s) en cause.

En option, le dispositif peut comporter en outre des moyens de création d'un code logiciel exécutable correspondant à un algorithme validé.

Dans une application typique, les algorithmes sont relatifs à des calculs de cryptage et/ou de décryptage.

Selon un mode de réalisation, le dispositif peut être configuré pour fonctionner avec un émulateur, le "hardware", i.e. matériel, le dispositif ayant une connexion à un système d'émulation de matériel, par exemple une carte à puce, et/ou avec un simulateur, le dispositif ayant une connexion à un simulateur de matériel, par exemple une carte à puce.

Dans le mode de réalisation préféré, le dispositif est fonctionnellement intégré à un ordinateur de type PC.

L'invention concerne également l'utilisation d'un dispositif du type précité pour construire un algorithme exploitable à partir d'une librairie de modules cryptographiques de base embarquée dans un circuit intégré, notamment une carte à puce.

L'invention concerne également un procédé d'évaluation d'algorithmes selon la revendication 13.

Les différents aspects optionnels présentés ci-dessus dans le cadre du dispositif s'appliquent mutatis mutandis à ce procédé.

L'invention sera mieux comprise et les avantages qui en découlent apparaîtront plus clairement à la lecture des modes de réalisation qui suivent, donnés purement à titre d'exemples non-limitatifs par référence aux dessins annexés dont :
- la figure 1, déjà décrite, est un organigramme qui résume les étapes principales dans l'élaboration et la validation d'un programme d'exécution d'un algorithme selon l'approche classique ;
- la figure 2 est un schéma bloc simplifié qui représente symboliquement des moyens fonctionnels d'un ordinateur et d'un programme informatique qui interviennent dans la mise en oeuvre d'un outil d'évaluation et de développement d'algorithme conforme à la présente invention ;
- la figure 3 est un organigramme présentant les principales étapes qui interviennent dans l'élaboration et la validation d'un algorithme conformément à l'invention ;
- la figure 4 représente une première page d'écran interactive provenant d'une interface logicielle de l'outil de la figure 2 ;
- la figure 5 représente une deuxième page d'écran interactive provenant d'une interface logicielle de l'outil de la figure 2 ;
- la figure 6 représente une troisième page d'écran interactive provenant d'une interface logicielle de l'outil de la figure 2 ;
- la figure 7 représente une quatrième page d'écran interactive provenant d'une interface logicielle de l'outil de la figure 2 ;
- la figure 8 représente une cinquième page d'écran interactive provenant d'une interface logicielle de l'outil de la figure 2 ; et
- la figure 9 est un schéma de principe illustrant les différentes fonctionnalités possibles avec l'outil d'évaluation et de développement d'algorithme de la figure 2.

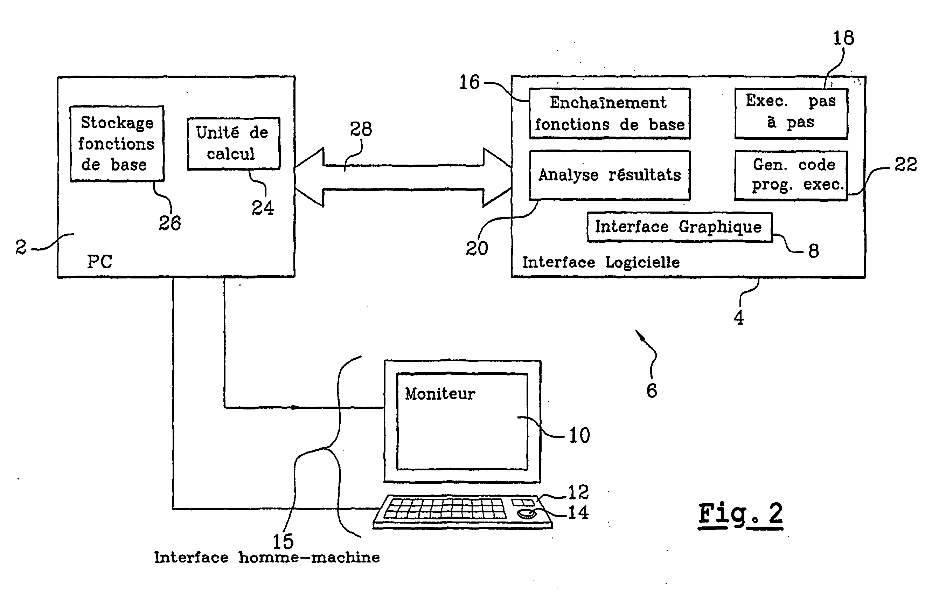

Les moyens fonctionnels mis en oeuvre dans un dispositif conforme à l'invention seront décrits par référence à la figure 2. Cette figure représente symboliquement un ordinateur tel qu'un ordinateur personnel (PC) 2 associé à une interface logicielle 4. Cette dernière est constituée d'un groupe de programmes et de fichiers accessibles par l'ordinateur 2 de sorte que l'ensemble comprenant l'interface logicielle et l'ordinateur constitue un outil d'évaluation et de développement d'algorithme 6.

Dans l'exemple, le groupe de programmes et de fichiers comprend :
- une interface graphique 8 qui permet entre autres de piloter l'ensemble de l'outil 8 de manière interactive au moyen d'un moniteur 10, d'un clavier 12 et d'un dispositif de pointage sur écran 14, tel qu'une souris ou une bille (ces moyens 10 à 14 sont ci-après désignés globalement par le terme interface homme machine 15);
- une unité d'enchaînement de fonctionnalités de base 16 (ci-après appelé unité d'enchaînement) qui permet de bâtir et de décomposer un algorithme, notamment un algorithme de cryptage, selon une concaténation de fonctionnalités de base ;
- une unité d'exécution pas-à-pas d'un algorithme 18 (ci-après appelé unité d'exécution) qui permet d'exécuter un algorithme successivement à travers chacune des fonctionnalités de base ;
- une unité d'analyse de résultats 20 (ci-après désignée unité d'analyse) qui permet d'interroger sur le déroulement de l'exécution de l'algorithme au niveau des fonctionnalités de base ; et
- un générateur de code de programme d'exécution 22, ci-après désigné générateur de code, qui permet d'écrire dans un langage approprié un programme d'exécution d'un algorithme entré et validé, par exemple en code source ou en assembleur.

Les différentes unités précitées fonctionnent en tandem avec les moyens matériels de l'ordinateur 2, et notamment de son unité de calcul 24 sous forme de microprocesseur, éventuellement avec un coprocesseur (non représenté) et de ses unités des stockage. L'une des unités de stockage 26 sert notamment à stocker, sous forme de modules, une bibliothèque de fonctionnalités de base utilisées par les différentes unités de l'interface logicielle 4. L'échange de données entre l'ordinateur et l'interface logicielle 4 s'opère au moyen d'un ensemble du bus interne globalement désigné par la référence 28.

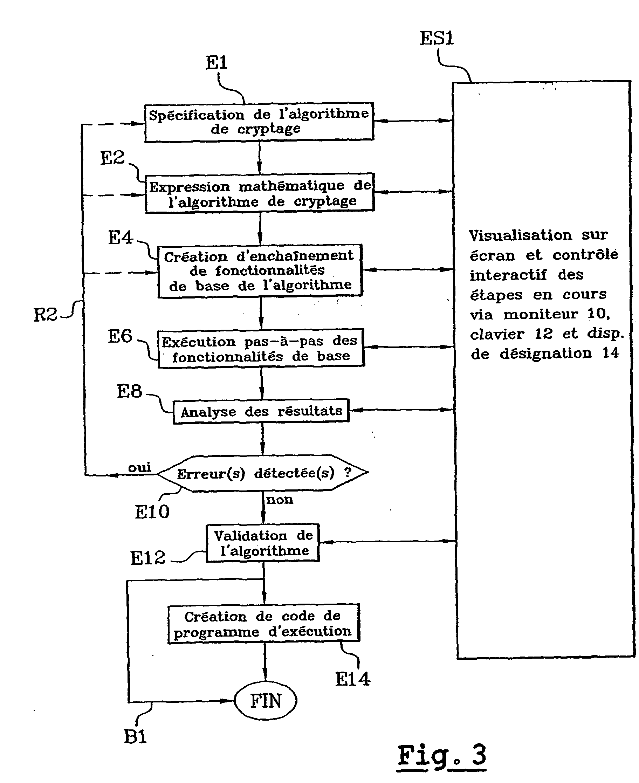

Un mode de fonctionnement de l'outil d'évaluation et de développement d'algorithme 6 sera décrit par référence à l'organigramme de la figure 3. On commence par une étape E1 de spécification de l'algorithme de cryptage. Cette étape est analogue à l'étape correspondante de la figure 1 et consiste à établir les spécificités, ou le cahier des charges, de l'algorithme à établir, par exemple le nombre de bits de cryptage, la structure requise pour les données d'entrée et de sortie, les caractéristiques de la clé de cryptage, des calculs de cryptage, etc.

La spécification est entrée au moyen de l'interface graphique 8, qui guide l'utilisateur via l'interface homme-machine 15. Comme le montre le pavé ES1 de la figure 3, l'interface graphique 8 est active jusqu'à la validation de l'algorithme, permettant à l'utilisateur de suivre tout le processus sous forme graphique et d'interagir à tout moment en temps réel.

Ensuite, on établit l'expression mathématique de l'algorithme de cryptage (étape E2) en prenant en compte la spécification établie à l'étape précédente. Cette étape E2 fait intervenir les modules de fonctionnalités de base dans la zone de stockage précitée 26. Pour une fonctionnalité de base, il peut y avoir plusieurs données d'entrée avec plusieurs paramètres de sortie. Dans l'exemple, ces modules sont présentés sous forme graphique dans un écran menu. Ils peuvent alors être désignés et agencés selon un enchaînement de manière à construire l'algorithme souhaité à partir d'opérations élémentaires (étape E3). On comprendra que les étapes E2 et E4 précitées sont imbriquées et que leur séparation est arbitraire. Les données de sortie d'un module servent alors de données d'entrée du module qui succède, et ainsi de suite. Les opérations effectuées par les différentes fonctionnalités de base sont de deux types :
- de bas niveau : opérations arithmétiques de base, par exemple l'addition, la multiplication, la division, la soustraction, pour tout ce qui est algorithme cryptographique ; et
- de niveau plus élevé, i.e. des opérations pour l'exécution d'une partie de l'algorithme, par exemple un calcul du type Rivest, Shamir et Adelman (RSA), Secure Hash Algorithm (SHA), Digital Signature Algorithm (DSA), et autres.

A partir de ces fonctionnalités de base, on établit des fonctionnalités de haut niveau et des protocoles, c'est-à-dire des algorithmes de haut niveau. Pour chaque fonctionnalité de base, on prend en compte plusieurs paramètres d'entrée possibles, et des paramètres de sortie. Donc, chaque fonctionnalité de base respecte une certaine spécification d'utilisation établie à l'étape E1. Plus il y a de paramètres d'entrée ou de sortie, plus ces paramètres doivent être contrôlés.

Ainsi, on procède ensuite à l'étape de contrôle au regard de la spécification établie d'une part de la validité de l'utilisation de chacun des modules, et d'autre part de la validité globale de l'ensemble de ces modules concaténés (étape E6). Cette étape fait intervenir l'unité d'exécution 18, qui va scruter les données d'entrée et de sortie de chaque module mis en oeuvre en contrôlant l'exécution pas-à-pas et l'enchaînement pas-à-pas des fonctionnalités de base, ce contrôle étant effectué par rapport à la spécification. Le contrôle en question peut être basé sur la forme des données. Par exemple, si une donnée en entrée ou en sortie d'un module donné doit être comprise entre une valeur de zéro et 32, l'unité d'exécution 18 va s'assurer qu'elle ne dépasse pas cette dernière valeur ou ne comporte pas une valeur négative.

L'unité d'exécution effectue aussi un contrôle sur la nature des paramètres fixés pour chacun des modules. En effet, dans certains algorithmes, il est requis qu'un paramètre d'entrée soit d'un type spécifique, par exemple un élément de l'ensemble des nombres premiers, ou comporte un nombre préétabli de bits (cas d'un critère externe).

En contrôlant ainsi l'exécution de l'algorithme à chaque étape d'une succession de fonctionnalités de base, on s'assure que l'algorithme qui sera développé correspond effectivement à sa spécification. Ainsi, on parvient par ce moyen logiciel à un contrôle fin des paramètres d'entrée et des données d'entrée. Ce contrôle est réalisé de façon graphique et visuelle au travers de l'interface graphique 8. On visualise notamment ce qui fonctionne et ne fonctionne pas au sein de l'algorithme.

Ensuite, on effectue une analyse du bilan des opérations (étape E8). Les éventuelles erreurs détectées et leur contexte sont affichés sur le moniteur 10. A partir de ces informations précises, l'utilisateur peut discerner le ou les module(s) en cause et agir efficacement pour corriger l'algorithme, ou éventuellement la spécification (étape E10 et rebouclage R2).

Si, ou lorsque, aucune erreur n'apparaît dans l'analyse des résultats, on valide l'algorithme (étape E12).

Par contraste avec l'approche classique de la figure 1, l'outil 6 conforme à l'invention ne nécessite pas la création d'un programme de test. On réalise simplement des essais avec des données, et c'est l'outil qui indique si les résultats sont conformes à la spécification ou pas. Le nombre de données de test à appliquer est déterminé arbitrairement par l'opérateur en fonction de la nature des fonctionnalités de base à tester et du critère de fiabilité imposé.

On note que conformément à l'invention, l'algorithme que l'on veut développer n'a pas besoin d'être transformé en code source afin d'être évalué. On écrit simplement l'algorithme sur le papier - ou directement via l'interface logicielle - et on recrée l'enchaînement décrit par cet algorithme à travers l'outil. Cet outil indique si l'enchaînement des fonctionnalités de base est conforme à la spécification. Autrement dit, on n'a pas à créer de programme exécutable, ni de programme de test. Néanmoins, on est renseigné, rien qu'en écrivant l'algorithme et en le reproduisant à travers cet outil logiciel, si l'algorithme est correct et valide par rapport à la spécification.

Selon un aspect optionnel de l'invention, l'outil 6 met également en oeuvre le générateur de code 22 pour créer le code exécutable si, ou lorsque, l'algorithme est valide (étape E14). On est alors sûr que ce code exécutable va fonctionner selon la spécification des fonctionnalités de base.

On gagne ainsi du temps par la création assistée par ordinateur du programme et par suppression de toute la phase de test au moyen d'un programme de test spécifiquement adapté au programme exécutable du l'algorithme.

En effet, on valide l'algorithme avant même de le transformer en programme, par une simulation mathématique avec contrôle des données d'entrée et des données de sortie, et ce à chaque groupe algorithmique élémentaire au sein de l'algorithme. Autrement dit, à chaque étape de l'algorithme, qui correspond en fait à l'appel d'une fonctionnalité de base, on vérifie tous les paramètres d'entrée et de sortie. Cela permet un contrôle très fin de l'algorithme sans avoir à créer de programme.

Il est possible d'utiliser l'outil 6 seulement pour valider un algorithme sans créer un code exécutable, dans lequel cas on termine le procédé tout de suite après l'étape de validation (boucle B1).

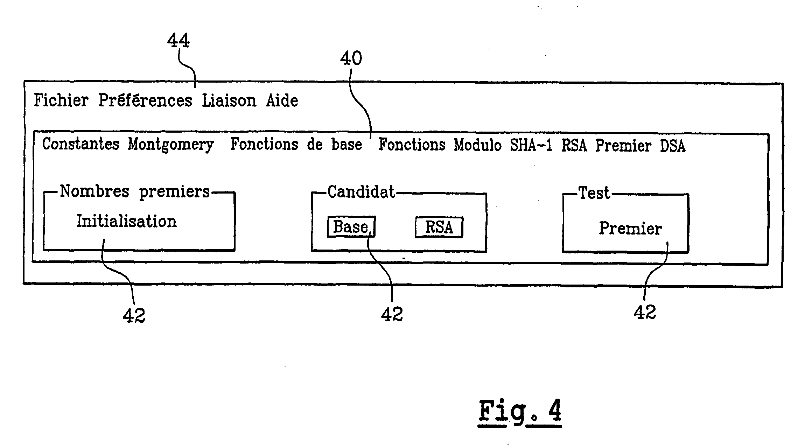

Il sera maintenant décrit par référence aux figures 4 à 8 des exemples de pages d'écran sur le moniteur 10 qui permettent un contrôle interactif de tout le processus d'élaboration et de validation d'un algorithme venant d'être décrit. Ces pages d'écran sont gérées par l'interface graphique 8 de l'interface logicielle 4.

La figure 4 représente une page d'accès à la bibliothèque de modules de fonctionnalités de base 40 stockés dans l'ordinateur 2. Ces modules sont affichés sous forme d'onglets sur lesquels on peut "cliquer" avec le dispositif de pointage 14 pour les faire figurer en avant plan. Dans l'exemple, le module permettant l'accès à des fonctions liées à des nombres premier est activé. Il apparaît alors les choix de paramétrage liés à ce module, sous forme de boutons 42 accessibles par le dispositif de pointage : initialisation d'un générateur de nombres premiers, choix de candidat (de base ou du type RSA), démarrage de la fonction de test, et autres.

D'autres modules accessibles correspondent à des fonctionnalités de bas niveau ("Montgomery constants, fonctions de base, fonctions modulo, ... et à des fonctionnalités de niveau plus élevé (SHA-1, RSA, DSA, ...).

L'utilisateur peut ainsi faire appel à différents modules et les configurer selon la spécification de l'algorithme.

Un en-tête de menu désigné "liaison" 44 permet à l'utilisateur de lier ensemble les différents modules pour construire un algorithme.

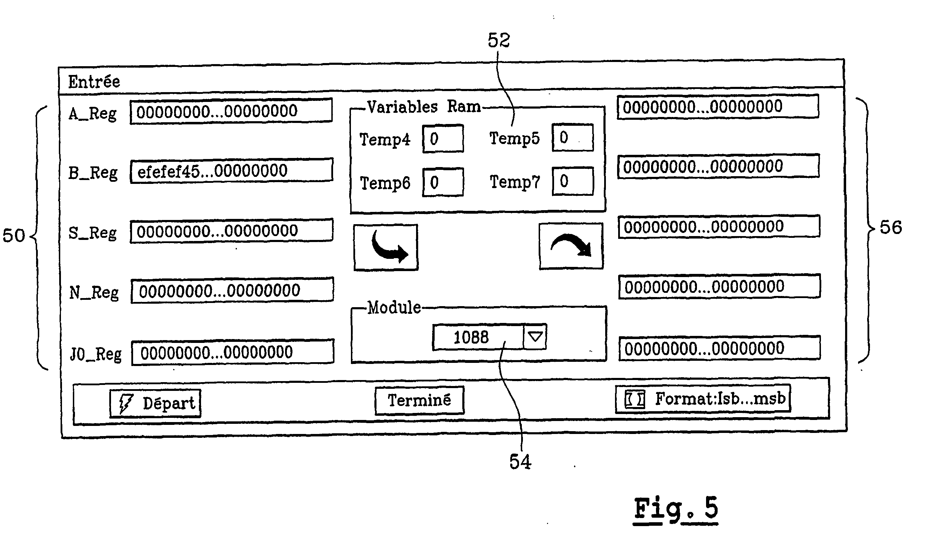

La figure 5 représente un écran actif juste avant l'exécution d'un algorithme par l'outil 6. Il comporte une série de fenêtres 50 d'une seule ligne. Chacune de ces fenêtres représente sommairement une zone respective de la mémoire qui se situe dans un matériel pour lequel on effectue la simulation, par exemple dans des registres d'une carte à puce. Dans l'exemple, ces zones correspondent à des registres (A_Reg, B_Reg, S_Reg, N_Reg, J0_Reg) liés à des zones mémoire affectées à un coprocesseur arithmétique, i.e. une entité "hardware" qui permet d'accélérer les calculs cryptographiques sur des cartes à puce.

Des variables stockées en mémoire vive et utilisées par la carte à puce sont présentées dans une fenêtre "Variables Ram" 52.

Une indication du nombre de bits que doit occuper certaines variables d'entrée du calcul est affichée sur une fenêtre "mode" 54.

Différentes valeurs intervenant dans le calcul (par exemple des résultats intermédiaires) sont présentées sur des fenêtres respectives désignées par le repère 56.

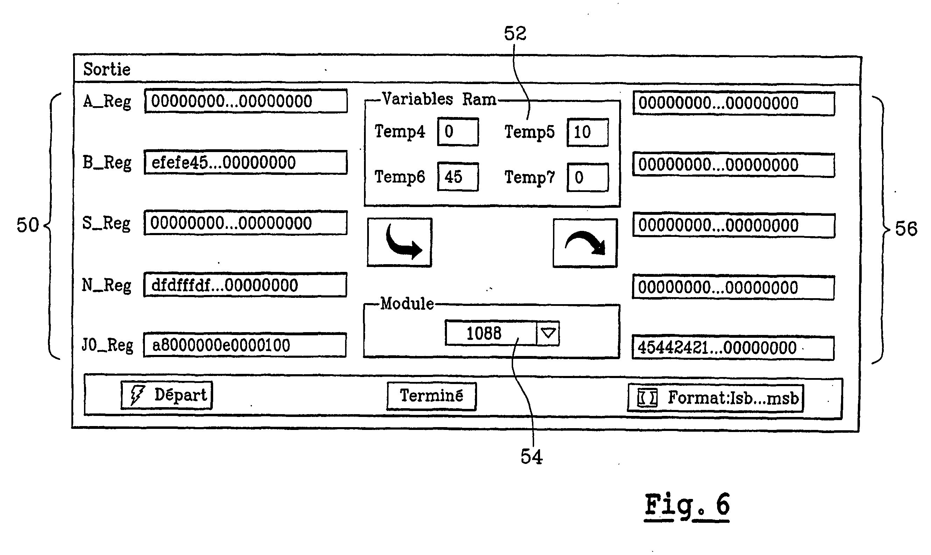

La figure 6 reprend l'écran actif de la figure 5 à un stade ultérieur durant le calcul. On constate que les contenus des registres 50 et de variables 52 qui étaient initialement positionnés à la valeur 0 affichent des valeurs non nulles qui reflètent l'état de l'exécution de l'algorithme dans les différents registres du dispositif simulé.

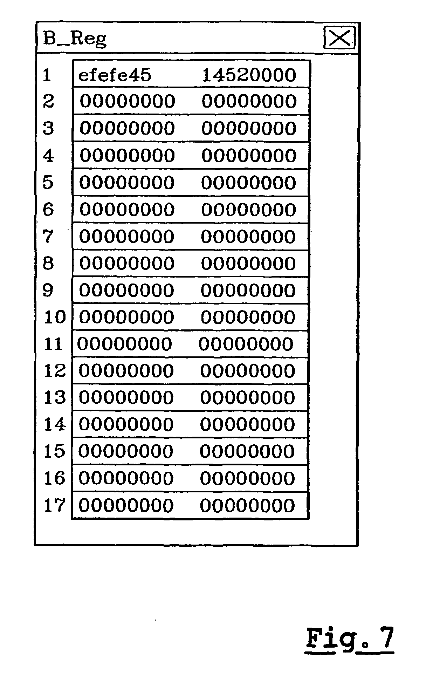

La figure 7 représente une fenêtre 70 d'affichage détaillé du contenu d'un des registres (B_Reg), ce contenu n'étant montré que sommairement par la fenêtre 50 de la figure 1. Ces fenêtres détaillées 70 peuvent être affichées en cliquant sur la désignation du registre concerné apparaissant sur la page d'écran de la figure 5.

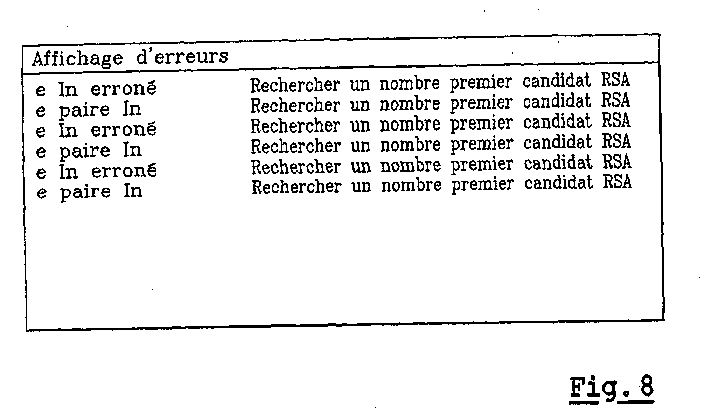

La figure 8 représente un rapport d'analyse de l'exécution d'un module, avec indication des éventuelles erreurs et leur origine.

L'outil d'évaluation et de développement d'algorithme 6 peut être conçu comme un moyen polyvalent permettant d'effectuer différentes tâches liées à l'élaboration d'un algorithme et à sa mise sous forme de code exécutable.

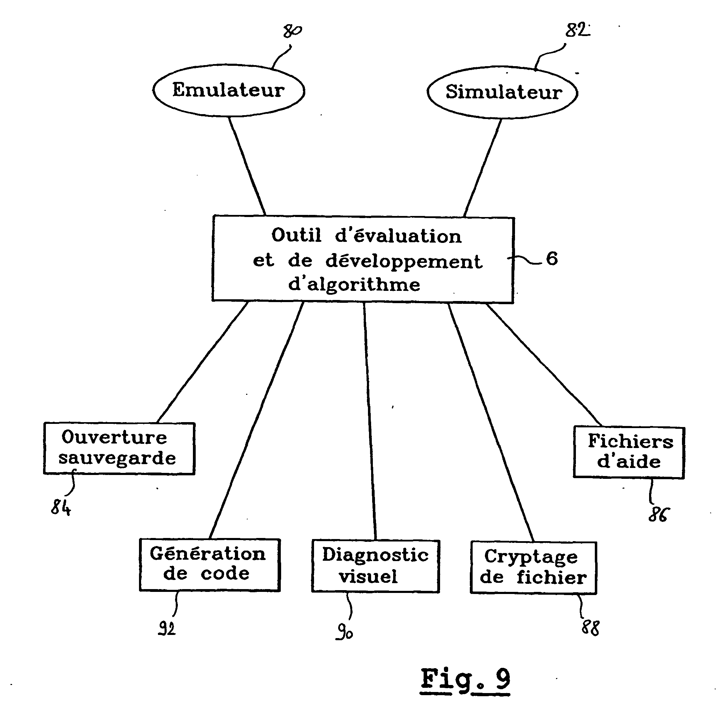

Cette polyvalence est illustrée graphiquement par la figure 9 qui représente l'outil 6 et les différentes fonctions qu'il peut réaliser, soit séparément, soit dans un ensemble de fonctionnalités. Ainsi, l'outil 6 peut être utilisé comme :
- émulateur 80, c'est-à-dire un moyen matériel et logiciel de connexion à un système d'émulation de hardware, qui reproduit le fonctionnement d'un produit (par exemple une carte à puce) dans son ensemble. Dans ce cas, l'outil 6 permet de tester un code enregistré dans le produit pour le valider à une étape finale de validation. Dans une telle application, le produit fait appel à l'outil 6 lorsqu'un calcul algorithmique (par exemple un calcul cryptographique) est nécessaire. L'outil va alors effectuer ce calcul et replacer les données correspondant au résultat dans le produit ;
- simulateur 82, où l'outil reproduit le fonctionnement d'une puce dans son ensemble, mais uniquement en logiciel ;
- appareil de sauvegarde 84 de données d'entrée et d'ouverture de fichiers, l'outil servant alors de bibliothèque de données pour des fichiers et les modules de fonctionnalités de base, permettant la sauvegarde et la régénération des enchaînements de fonctions ;
- moyen d'assistance 86 pour l'utilisation des différentes fonctions offertes par des fichiers d'aide et autres moyens didacticiels, permettant une prise en main rapide. Il permet aussi la connexion au manuel d'utilisation de la bibliothèque embarquée sur puce au travers de l'aide en ligne ;
- appareil de cryptage et de décryptage 88 de fichiers, permettant d'entrer un fichier à crypter selon une spécification voulue et de le ressortir sous forme cryptée ;
- outil de diagnostic visuel 90, c'est-à-dire la fonction principale telle que décrite par référence aux figures 2 à 8 ; et
- générateur de code 92, permettant de produire un code exécutable à partir d'un algorithme.

Une des applications de l'invention se situe dans les systèmes de cryptage pour les cartes à puce. Dans ce cas, la carte à puce contient les fonctionnalités de base cryptographiques précitées stockées dans des registres de sa zone mémoire, et qui sont appelés par le code logiciel. L'exploitant de cette carte, qui veut mettre en oeuvre des moyens algorithmiques de cryptage ou de décryptage, va alors utiliser ces fonctionnalités de base en tant que modules élémentaires selon un enchaînement fixé et validé par l'outil 6. On note que ces modules sont difficiles à manier et à utiliser dans une approche classique, i.e. sans l'aide de l'outil.

Plus spécifiquement, l'outil 6 possède toutes les fonctions de cryptage qui sont fournies dans la bibliothèque cryptographique embarquée dans la carte à puce (ou appareil associé, par exemple un lecteur de carte à puce). L'utilisateur peut construire pas-à-pas son algorithme cryptographique, par l'appel successif des fonctions de bas niveau. Il renseigne par l'interface graphique 8 les données d'entrée de chaque fonction et par "click" sur les boutons apparaissant dans les pages d'écran, l'outil lui donne le résultat.

Il peut donc effectuer étape par étape son cryptage/décryptage, l'outil détectant les mauvaises manipulations de fonctions et affichant des messages d'erreur.

Le développeur peut donc, sans avoir créé aucune ligne de code, valider son enchaînement de fonctions et, s'il le désire, l'outil peut lui créer le code assembleur correspondant à son algorithme. Cet outil permet donc de réduire les phases de développement, de test et de validation.

Sa principale fonctionnalité est de pouvoir valider un algorithme cryptographique de manière visuelle et de générer automatiquement le code embarqué.

L'outil selon l'invention permet donc d'aider le développeur à appeler des modules de fonctionnalités de base de façon correcte afin qu'il puisse établir un code qui soit en tout point valide et fonctionnel.

## Revendications

1. Dispositif (6) d'évaluation d'algorithmes comprenant:
- une interface graphique (8), active jusqu'à la fin de l'évaluation, pour guider un utilisateur via une interface homme-machine (15) vers l'établissement d'un algorithme et d'une spécification imposée à cet algorithme, ladite spécification décrivant des paramètres d'entrée et de sortie de données souhaités pour l'algorithme,
- des moyens (16) de désignation et d'agencement de fonctionnalités de base, coopérant avec ladite interface graphique, permettant de bâtir l'algorithme selon une concaténation desdites fonctionnalités de base, chaque fonctionnalité de base comprenant une opération élémentaire de l'algorithme avec des données d'entrée prédéfinies et des données de sortie prédéfinies correspondantes, les données de sortie d'une fonctionnalité devant servir de données d'entrée de la fonctionnalité qui succède,
- des moyens (18) d'exécution et de contrôle de l'algorithme bâti, ces moyens analysant, par référence à ladite spécification, les données d'entrée et de sortie de chaque fonctionnalité utilisée, lors d'une exécution pas à pas de chacune desdites fonctionnalités, de sorte à contrôler l'exécution pas à pas ainsi que l'enchaînement pas à pas des fonctionnalités de base afin de permettre à l'utilisateur de construire pas à pas l'algorithme en conformité à ladite spécification,
- des moyens (20) d'indication d'un éventuel dysfonctionnement détecté par les moyens d'exécution et de contrôle.

2. Dispositif selon la revendication 1, **caractérisé en ce que** les fonctionnalités de base se présentent sous forme de modules respectifs, donc certains au moins sont des modules d'exécution d'opération de bas niveau de type opération arithmétiques simples.

3. Dispositif selon la revendication 2, **caractérisé en ce que** certains modules sont des modules d'exécution d'opérations de niveau plus élevé.

4. Dispositif selon l'une quelconque des revendications 1 à 3, **caractérisé en ce que** l'interface graphique (8) permet de visualiser lesdits paramètres d'entrée et de sortie durant l'exécution pas à pas de l'algorithme.

5. Dispositif selon l'une quelconque des revendications 1 à 4, **caractérisé en ce qu'**il présente sous forme graphique les paramètres d'entrée et de sortie de données relatifs à chaque fonctionnalité mise en oeuvre.

6. Dispositif selon l'une quelconque des revendications 1 à 5, **caractérisé en ce que** les moyens (20) d'indication présentent un diagnostic des éventuelles présentent un diagnostic des éventuelles erreurs, indiquant la ou les fonctionnalités de base mise (s) en cause.

7. Dispositif selon l'une quelconque des revendications 1 à 6, **caractérisé en ce qu'**il comporte en outre des moyens de création d'un code logiciel exécutable correspondant à un algorithme validé.

8. Dispositif selon l'une quelconque des revendications 1 à 7, **caractérisé en ce que** les algorithmes sont relatifs à des calculs de cryptage et/ou de décryptage.

9. Dispositif selon l'une quelconque des revendications 1 à 8, **caractérisé en ce qu'**il est configuré pour fonctionner avec un émulateur de type « hardware », le dispositif ayant une connexion à un système d'émulation de matériel, par exemple une carte à puce.

10. Dispositif selon l'une quelconque des revendications 1 à 9, **caractérisé en ce qu'**il est configuré pour fonctionner avec un simulateur, le dispositif ayant une connexion à un simulateur de matériel, par exemple une carte à puce

11. Dispositif selon l'une quelconque des revendications 1 à 10, **caractérisé en ce qu'**il est fonctionnellement intégré à un ordinateur de type PC (2).

12. Utilisation du dispositif selon l'une quelconque des revendications 1 à 11 pour construire un algorithme exploitable à partir d'une librairie de modules cryptographiques de base embarquée dans un circuit intégré, notamment une carte à puce.

13. procédé d'évaluation d'algorithmes comprenant une étape (E1) d'établissement d'une spécification d'algorithme décrivant des paramètres d'entrée et de sortie de données souhaités pour l'algorithme et une étape (E2) d'établissement d'un algorithme devant se conformer à ladite spécification ;
**caractérisé en ce qu'**il comporte les étapes :
- de bâtir l'algorithme, au moyen d'une interface graphique (8) active jusqu'à la fin de l'évaluation guidant un utilisateur via une interface homme-machine (15), selon une concaténation de fonctionnalités de base, chaque fonctionnalité de base comprenant une opération élémentaire de l'algorithme avec des données d'entrée prédéfinies et des données de sortie prédéfinies correspondantes, les données de sortie d'une fonctionnalité devant servir de données d'entrée de la fonctionnalité qui succède (E4) ;
- d'analyser, par référence à ladite spécification, les données d'entrée et de sortie de chaque fonctionnalité utilisée, lors d'une exécution pas à pas de chacune desdites fonctionnalités, de sorte à contrôler l'exécution pas à pas ainsi que l'enchaînement pas à pas des fonctionnalités de base, afin de permettre à l'utilisateur de construire pas à pas l'algorithme en conformité à ladite spécification (E6) ; et
- d'indiquer un éventuel dysfonctionnement détecté lors de l'étape de contrôle (E10).

14. Procédé selon la revendication 13, **caractérisé en ce que** les fonctionnalités de base se présentent sous forme de modules respectifs, donc certains au moins sont des modules d'exécution d'opération de bas niveau de type opération arithmétiques simples.

15. Procédé selon la revendication 14, **caractérisé en ce que** certains modules sont des modules d'exécution d'opérations de niveau plus élevé.

16. Procédé selon l'une quelconque des revendications 13 à 15, **caractérisé en ce qu'**il permet un contrôle sur l'ensemble des étapes par une interface graphique interactive (8).

17. Procédé selon l'une quelconque des revendications 13 à 16, **caractérisé en ce que** l'on présente sous forme graphique lesdits paramètres d'entrée et de sortie durant l'exécution pas à pas de l'algorithme.

18. Procédé selon l'une quelconque des revendications 13 à 17, **caractérisé en ce que** lors de l'étape d'indication (E10), on présente un diagnostic des éventuelles erreurs, indiquant la ou les fonctionnalités de base mise(s) en cause.

19. Procédé selon l'une quelconque des revendications 13 à 18, **caractérisé en ce qu'**il comprend une étape (E14) de création d'un code logiciel exécutable correspondant à un algorithme une fois celui-ci validé suite à l'étape de vérification (E10).

20. Procédé selon l'une quelconque des revendications 13 à 19, **caractérisé en ce que** les algorithmes sont relatifs à des calculs de cryptage et/ou de décryptage.

## Patentansprüche

1. Vorrichtung (6) zur Bewertung von Algorithmen, aufweisend:
eine graphische Schnittstelle (8), die bis zum Ende der Bewertung aktiv ist, um einen Benutzer, mit Hilfe einer Schnittstelle Mensch-Maschine (15) zu führen, und zwar in Richtung der Erstellung eines Algorithmus, und einer Spezifizierung, die dem Algorithmus auferlegt ist, wobei die Spezifizierung die für den Algorithmus gewünschten Parameter der Eingabe und der Ausgabe der Daten beschreiben bzw. festlegen,
Mittel (16), zur Bezeichnung und zur Anordnung von Basisfunktionalitäten, die mit oben genannter graphischer Schnittstelle zusammenarbeiten, und die erlauben, den Algorithmus nach Zusammenspiel der vorgenannten Basisfunktionalitäten zu erstellen, wobei jede Basisfunktionalität eine elementare Algorithmusoperation mit den entsprechenden vorher bestimmten Eingangsdaten, und den entsprechenden vorbestimmten Ausgangsdaten beinhaltet, wobei diese Ausgangsdaten der Funktionalität als Eingangsdaten der nachfolgenden Funktionalität dienen,
Mittel (18) zur Ausführung und Kontrolle des erstellten Algorithmus, wobei diese Mittel unter Bezugnahme auf die Spezifizierung, die Eingangs- und Ausgangs-Daten jeder benutzten Funktionalität analysieren, und zwar während einer schrittweisen Ausführung der genannten Funktionalitäten, und zwar so, dass die schrittweise Ausführung und deren schrittweise Verkettung der Basisfunktionalitäten kontrolliert wird, um dem Benutzer zu erlauben, den genannten Algorithmus schrittweise und konform mit der Spezifikationen zu konstruieren.
Mittel (20), zur Anzeige von eventueller Fehlfunktion, die erkannt wird durch die Mittel der Ausführung und Kontrolle.

2. Vorrichtung, nach Anspruch 1,
**dadurch gekennzeichnet, dass** die Basisfunktionalitäten sich in Form der jeweiligen Module zeigen, von denen einige mindestens Operationsausführungsmodule von niedrigem Niveau sind, und zwar vom Typ einfacher arithmetischer Operationen.

3. Vorrichtung, nach Anspruch 2,
**dadurch gekennzeichnet, dass** einige Module Operationsausführungsmodule von höherem Niveau sind.

4. Vorrichtung, nach einem der Ansprüche 1 bis 3,
**dadurch gekennzeichnet, dass** die graphische Schnittstelle (8) erlaubt, die genannten Parameter der Eingabe und der Ausgabe während der schrittweisen Ausführung des Algorithmus zu visualisieren.

5. Vorrichtung, nach der irgendeinem der Ansprüche 1 bis 4,
**dadurch gekennzeichnet, dass** sie in graphischer Form die Parameter der Eingabe und der Ausgabe der Daten aufweist, die sich auf jede ausgeführte Funktionalität beziehen.

6. Vorrichtung, nach der irgendeinem der Ansprüche 1 bis 5,
**dadurch gekennzeichnet, dass** die Mittel (20) der Anzeige eine Diagnose präsentieren der eventuellen Fehler, oder der in Frage gestellten Basisfunktionalität.

7. Vorrichtung, nach der irgendeinem der Ansprüche 1 bis 6,
**dadurch gekennzeichnet, dass** sie ferner Mittel zur Schaffung eines ausführbaren Softwarecodes, der einem geprüften Algorithmus entspricht, aufweist.

8. Vorrichtung, nach der irgendeinem der Ansprüche 1 bis 7,
**dadurch gekennzeichnet, dass** sich die Algorithmen auf Berechnungen der Kodierung, und/oder Dekodierung beziehen.

9. Vorrichtung, nach der irgendeinem der Ansprüche 1 bis 8,
**dadurch gekennzeichnet, dass** sie so konfiguriert ist, um mit einem Emulator vom Typ "Hardware" zu funktionieren, wobei die Vorrichtung eine Verbindung zu einem Emulationssystem hat, zum Beispiel eine Chipkarte.

10. Vorrichtung, nach irgendeinem der Ansprüche 1 bis 9,
**dadurch gekennzeichnet, dass** sie konfiguriert ist, um mit einem Simulator zu funktionieren, wobei die Vorrichtung eine Verbindung zu einem Simulator hat, zum Beispiel eine Chipkarte.

11. Vorrichtung, nach der irgendeinem der Ansprüche 1 bis 10,
**dadurch gekennzeichnet, dass** sie funktionell in einen Rechner vom Typ PC (2) integriert ist.

12. Benutzung der Vorrichtung nach irgendeinem der Ansprüche 1 bis 11,
um einen nutzbaren Algorithmus, ausgehend von einem Speicher kryptographischer Basismodule, zu erhalten, der dann in einer integrierten Schaltung untergebracht wird, insbesondere einer Chipkarte.

13. Verfahren zur Bewertung von Algorithmen, aufweisend
eine Stufe (E1) zur Erstellung einer Spezifizierung des Algorithmus, die für den Algorithmus gewünschte Parameter der Eingabe und der Ausgabe beschreibt, und eine Stufe (E2) der Erstellung eines Algorithmus, und zwar vor Anpassung an die besagte Spezifizierung,
**dadurch gekennzeichnet, dass** es die Stufen aufweist:
- Erstellen des Algorithmus mit Hilfe einer aktiven graphischen Schnittstelle (8), die bis zum Ende der Bewertung aktiv ist, die einen Benutzer via einer Schnittstelle Mensch-Maschine (15), gemäß den Verknüpfungen von Basisfunktionalitäten leitet, wobei jede Basisfunktionalität eine elementare Algorithmusoperation mit vorbestimmten Eingangsdaten und den entsprechenden vorbestimmten Ausgangsdaten enthält, wobei die Ausgangsdaten einer Funktionalität als Eingangsdaten der Funktionalität dienen, die darauf folgt (E4);
- Analysieren , unter Bezugnahme auf besagte Spezifizierung, der Eingangsdaten und der Ausgangsdaten jeder benutzten Funktionalität, während einer schrittweisen Ausführung jeder besagten Funktionalität, und um die schrittweise Ausführung sowie die schrittweise Verkettung der Basisfunktionalitäten zu kontrollieren,
um dem Benutzer zu erlauben, den Algorithmus konform zur besagten Spezifikation (E6) schrittweise zu erstellen.
- und um eine mögliche Fehlfunktion anzuzeigen, die bei der Kontrollstufe (F10) festgestellt wird.

14. Verfahren nach Anspruch 13,
**dadurch gekennzeichnet, dass** die Basisfunktionalitäten in Form der jeweiligen Module vorliegen, von denen einige mindestens Operationsausführungsmodule von niedrigem Niveau sind, und zwar vom Typ einfacher arithmetischer Operationen.

15. Verfahren nach Anspruch 14,
**dadurch gekennzeichnet, dass** einige Module Operationsausführungsmodule von höherem Niveau sind.

16. Verfahren nach irgendeinem der Ansprüche 13 bis 15,
**dadurch gekennzeichnet, dass** sie eine Kontrolle über die Gesamtheit der Stufen durch eine graphische interaktive Schnittstelle (8) erlaubt.

17. Verfahren nach irgendeinem der Ansprüche 13 bis 16,
**dadurch gekennzeichnet, dass** sie in graphischer Form die besagten Parameter der Eingabe und der Ausgabe während der schrittweisen Ausführung der Algorithmen zeigt.

18. Verfahren nach irgendeinem der Ansprüche 13 bis 17,
**dadurch gekennzeichnet, dass** man bei Anzeigenstufe (E10) eine Diagnostik der möglichen Fehler, unter Angabe der in Frage gestellten Basisfunktionalität(en) darstellt.

19. Verfahren nach irgendeinem der Ansprüche 13 bis 18,
**dadurch gekennzeichnet, dass** sie eine Stufe (E14) zur Erstellung eines ausführbaren Softwarecodes beinhaltet, der einem Algorithmus entspricht, der nach der Prüfüngsstufe (E10) für gültig erklärt wird.

20. Verfahren nach irgendeinem der Ansprüche 13 bis 19,
**dadurch gekennzeichnet, dass** sich die Algorithmen auf die Berechnungen der Kodierung und/oder Dekodierung beziehen.

## Claims

1. Device (6) for evaluating algorithms comprising:
- a graphics interface (8), active until the end of the evaluation, for guiding a user via a man/machine interface (15) to the establishment of an algorithm and of a specification imposed on this algorithm, the said specification describing data input and output parameters desired for the algorithm,
- means (16) of designation and of layout of basic functionalities, cooperating with the said graphics interface, making it possible to build the algorithm according to a concatenation of the said basic functionalities, each basic functionality comprising an elementary operation of the algorithm with predefined input data and corresponding predefined output data, the output data of a functionality having to serve as input data of the succeeding functionality,
- means (18) of execution and of monitoring of the algorithm built, these means analysing, by reference to the said specification, the input and output data of each functionality used, during stepwise execution of each of the said functionalities, so as to monitor the stepwise execution as well as the stepwise chaining together of the basic functionalities so as to allow the user to construct the algorithm stepwise in compliance with the said specification,
- means (20) of indication of any malfunction detected by the means of execution and of monitoring.

2. Device according to Claim 1, **characterized in that** the basic functionalities take the form of respective modules, therefore certain at least are modules for executing low level operation of simple arithmetic operation type.

3. Device according to Claim 2, **characterized in that** certain modules are modules for executing operations of higher level.

4. Device according to any one of Claims 1 to 3, **characterized in that** the graphics interface (8) makes it possible to view the said input and output parameters during the stepwise execution, of the algorithm.

5. Device according to any one of Claims 1 to 4, **characterized in that** it presents in graphics form the data input and output parameters pertaining to each functionality employed.

6. Device according to any one of Claims 1 to 5, **characterized in that** the means (20) of indication present a diagnostic of any errors, indicating the basic functionality or functionalities called into question.

7. Device according to any one of Claims 1 to 6, **characterized in that** it furthermore comprises means of creation of an executable software code corresponding to a validated algorithm.

8. Device according to any one of Claims 1 to 7, **characterized in that** the algorithms pertain to encryption and/or decryption computations.

9. Device according to any one of Claims 1 to 8, **characterized in that** it is configured to operate with a "hardware" type emulator, the device having a connection to a system for emulating hardware, for example a chip card.

10. Device according to any one of Claims 1 to 9, **characterized in that** it is configured to operate with a simulator, the device having a connection to a simulator of hardware, for example a chip card.

11. Device according to any one of Claims 1 to 10, **characterized in that** it is operationally integrated with a PC type computer (2).

12. Use of the device according to any one of Claims 1 to 11 to construct an algorithm utilizable on the basis of a library of basic cryptographic modules embedded in an integrated circuit, in particular a chip card.

13. Method for evaluating algorithms comprising a step (E1) of establishing an algorithm specification describing data input and output parameters desired for the algorithm and a step (E2) of establishing an algorithm having to comply with the said specification;
**characterized in that** it comprises the steps:
- of building the algorithm, by means of a graphics interface (8) active until the end of the evaluation guiding a user via a man/machine interface (15), according to a concatenation of basic functionalities, each basic functionality comprising an elementary operation of the algorithm with predefined input data and corresponding predefined output data, the output data of a functionality having to serve as input data of the succeeding functionality (E4);
- of analysing, by reference to the said specification, the input and output data of each functionality used, during stepwise execution of each of the said functionalities, so as to monitor the stepwise execution as well as the stepwise chaining together of the basic functionalities, so as to allow the user to construct the algorithm stepwise in compliance with the said specification (E6); and
- of indicating any malfunction detected during the monitoring step (E10).

14. Method according to Claim 13, **characterized in that** the basic functionalities take the form of respective modules, therefore certain at least are modules for executing low level operation of simple arithmetic operation type.

15. Method according to Claim 14, **characterized in that** certain modules are modules for executing operations of higher level.

16. Method according to any one of Claims 13 to 15, **characterized in that** it allows monitoring over the whole set of steps by an interactive graphics interface (8).

17. Method according to any one of Claims 13 to 16, **characterized in that** the said input and output parameters are presented in graphics form during the stepwise execution of the algorithm.

18. Method according to any one of Claims 13 to 17, **characterized in that** during the indication step (E10), a diagnosis of any errors is presented, indicating the basic functionality or functionalities called into question.

19. Method according to any one of Claims 13 to 18, **characterized in that** it comprises a step (E14) of creating an executable software code corresponding to an algorithm once the latter has been validated following the verification step (E10).

20. Method according to any one of Claims 13 to 19, **characterized in that** the algorithms pertain to encryption and/or decryption computations.
